# FASCICULE DE BREVET EUROPEEN

(11) **EP 1 422 010 B1**
(45) Date de publication et mention de la délivrance du brevet: **22.03.2006**
(21) Numéro de dépôt: 03300062.1
(22) Date de dépôt: 16.07.2003
(51) Int. Cl.: B23K 9/04, B23K 9/23, B23K 35/30

(54) **Echangeurs thermiques en cuivre brasés et leur procédé de fabrication par soudage**
Wärmetauscher aus gelötetem Kupfer und Schweissverfahren zu deren Herstellung
Soldered copper heat exchangers and welding method of manufacturing them

(30) Priorité: 30.07.2002 FR 0209658
(43) Date de publication de la demande: 26.05.2004
(73) Titulaire: L'AIR LIQUIDE, Société Anonyme à Directoire et Conseil de Surveillance pour l'Etude et l'Exploitation des, 75321 Paris Cedex 07 (FR)
(72) Inventeur: BONNET, Christian, 95650, PUISEUX-PONTOISE (FR); FORTAIN, Jean-Marie, 95520, OSNY (FR); WAGNER, Marc, 94100, SAINT MAUR (FR)
(74) Mandataire: Pittis, Olivier

(56) Documents cités:
- FR-A- 2 815 895
- GB-A- 2 328 732
- US-A- 4 817 859
- "Metals Handbook, Ninth Edition, Volume 6" , AMERICAN SOCIETY FOR METALS , USA XP002238868 Glossary, Page 3, "buttering" * page 404; tableau 3 * * page 405, colonne 3, alinéa 5 * * page 406, colonne 1, alinéa 4 *

## Description

L'invention porte sur un procédé de soudage d'échangeurs thermiques en cuivre brasés, un procédé de fabrication par soudage d'échangeurs thermiques, les échangeurs obtenus par un tel procédé et leur utilisation pour la séparation des gaz, notamment de l'air.

De tels procédés, un tel échangeur thermique et une telle utilisation sont décrits dans le document FR 2 815 895 A.

Les échangeurs de chaleur ou échangeurs thermiques en cuivre sont habituellement fabriqués d'abord par empilage de plaques et d'ailettes qui sont brasées ensemble pour former une matrice, puis par rajout d'une ou plusieurs enceintes collectrices de fluide servant à collecter et à distribuer les fluides traités dans l'équipement.

De façon connue la ou les enceintes collectrices de fluide, encore appelés collecteurs, sont rapportées et fixées à la matrice brasée de l'échangeur par soudage.

Dans le cas général d'une liaison cuivre/cuivre par soudage, il est d'usage d'utiliser un alliage de cuivre (cupro -nickel ou cupro-aluminium...) comme produit d'apport car il sont plus facile à mettre en oeuvre que le cuivre pur.

Cependant, dans le cas particulier de la jonction d'un ou plusieurs collecteurs à une matrice brasée lors de la fabrication d'un échangeur thermique, la soudure de liaison unissant le collecteur de fluide à la matrice croise nécessairement les interstices remplis de brasure qui relient entre elles les plaques et ailettes constitutives de cette partie de l'échangeur.

Actuellement, deux catégories d'alliages de brasure sont utilisés pour braser le cuivre, à savoir les alliages cuivre -argent qui sont fort coûteux et les alliages cuivre - phosphore qui sont beaucoup moins chers mais contiennent généralement une quantité de phosphore comprise entre environ 5% et environ 8% en poids. En effet, l'addition d'argent ou de phosphore permet d'abaisser significativement la température de fusion de l'alliage par rapport au cuivre pur, typiquement de plusieurs centaines de degrés Celsius, ce qui est indispensable pour pouvoir effectuer une opération de brasage.

Cependant, plusieurs problèmes se posent lorsque la matrice formée de plaques et d'ailettes brasées a été fabriquée en utilisant un brasage avec un alliage de cuivre additionné de phosphore.

En effet, lors du soudage de la matrice en cuivre brasée avec par exemple une enceinte collectrice en cuivre, la brasure de la matrice située au niveau du plan de joint devant être soudé va se retrouver mélangée à l'alliage de soudage utilisé pour réaliser le joint de soudure entre cette matrice brasée et la paroi de l'enceinte qui doit y être soudée.

Il peut alors se produire une vaporisation du phosphore engendrant un risque de porosité car la température du bain de soudage est beaucoup plus élevée que la température de brasage et surtout une fragilisation du joint de soudure ainsi réalisé avec les produits d'apport traditionnels car la solubilité du phosphore dans les alliages utilisés habituellement pour le soudage est très faible, ce qui est à l'origine d'importantes ségrégations de phosphore, lors de la solidification du joint, et par conséquent à la formation de zones fragiles très riches en phosphore.

Cela peut alors conduire à des phénomènes de fissuration du joint de soudure et il peut ensuite apparaître des fuites ou d'autres problèmes d'étanchéité sur l'échangeur ainsi fabriqué.

Le but de l'invention est alors de proposer un procédé de soudage amélioré applicable à la fabrication d'échangeurs thermiques en cuivre brasés permettant de pallier les problèmes susmentionnés, ainsi que des échangeurs améliorés obtenus par ce procédé, lesquels ne présentent pas de problèmes de fuite ou de mauvaise étanchéité.

Dit autrement, le problème qui se pose est de pouvoir souder efficacement des parties en cuivre d'échangeurs thermiques sans formation de zones fragiles riches en phosphore et donc de proposer un procédé de soudage d'échangeurs thermiques conduisant à l'obtent ion d'échangeurs présentant une résistance supérieure à celle des échangeurs dont les sous-parties qui les constituent ont été soudées par mise en oeuvre de procédés traditionnels.

L'invention concerne alors un procédé de soudage à l'arc d'au moins une pièce métallique sur une matrice comprenant au moins une zone brasée dont le brasage contient du cuivre et du phosphore selon la revendication 1, dans lequel :
(a) on réalise, sur au moins une partie de la zone brasée, un dépôt d'au moins une couche d'un alliage contenant du cuivre et plus de 1 % en poids d'étain, et
(b) on opère un soudage de la pièce métallique sur ladite au moins une couche d'alliage de cuivre et d'étain déposée à l'étape (a).

Dans le cadre de l'invention, les pourcentages (%) sont des pourcentages en poids.

Selon le cas, le procédé de l'invention peut comprendre l'une ou plusieurs des caractéristiques techniques suivantes :
- l'alliage de cuivre et d'étain contient au moins 1.05% d'étain, de préférence au moins 1.2 % d'étain.
- l'alliage de cuivre et d' étain contient moins de 10% d'étain, de préférence moins de 6% % d'étain.
- l'alliage de cuivre et d'étain contient au moins 80% en poids de cuivre, de préférence au moins 90% de cuivre.
- l'alliage de cuivre et d'étain contient moins de 1% en poids de phosphore.
- l'alliage de cuivre et d'étain contient de 2 % à 8 % en poids d'étain, de préférence de 3 à 6% d'étain.
- à l'étape (a), on réalise un dépôt de plusieurs couches à base d'alliage de cuivre et d'étain se superposant au moins partiellement les unes aux autres.
- le dépôt d'au moins une couche d'alliage de cuivre et d'étain de l'étape (a) est réalisé par (i) préchauffage local de la zone à revêtir d'alliage et (ii) apport et dépôt, sur la zone préchauffée à l'étape (i), de l'alliage de cuivre et d'étain fondu par un arc électrique.
- le préchauffage de l'étape (i) est opéré par mise en oeuvre d'un ou plusieurs arcs électriques, de préférence au moins un arc généré par une torche de soudage TIG
ou plasma.
- à l'étape (ii), l'apport d'alliage s e fait sous la forme d'un fil fusible en alliage de cuivre et d'étain.
- à l'étape (ii), l'arc électrique permettant de fondre le fil fusible est généré par au moins une torche de soudage MIG ou TIG.
- la matrice brasée contient, en outre, au moins un élément de brasure choisi parmi Sn, Ag et Zn.
- l'alliage de cuivre et d'étain constituant la ou les couches déposées à l'étape (a) contient éventuellement au moins un élément additionnel choisi parmi le silicium, le manganèse, le fer et le nickel.
- le brasage contient de 3 à 10% de phosphore, de 0 à 15% d'argent et de 0 à 1 % de nickel.
- la ou les couches déposées à l'étape (a) contiennent moins de 0.5% de manganèse, moins de 0.5% de silicium et moins de 0.05% de fer.
- à l'étape (b), on soude la pièce par un procédé MIG, TIG, plasma ou une combinaison de ces procédés, de préférence un procédé MIG pulsé.
- la matrice brasée est portée par un empilage de plusieurs plaques séparées par des ailettes formant entretoises entre lesdites plaques, lesdites ailettes et lesdites plaques étant basées les unes avec les autres de sorte de former ladite matrice brasée.
- la pièce est une partie constitutive d'un récipient collecteur et/ou distributeur de fluide formant une partie d'un échangeur thermique, de préférence ladite pièce est en cuivre ou en acier inoxydable.
- la couche déposée sur la matrice a une largeur suffisante pour permettre de réaliser un joint de soudage entre la pièce et ladite couche sans incorporation dans ledit joint d'éléments additionnels provenant de la zone brasée de la matrice.

L'invention concerne aussi un procédé de fabrication d'un échangeur thermique brasé en cuivre selon le revendication 14 dans lequel on met en oeuvre le procédé de soudage selon l'invention pour souder au moins un récipient, de préférence en cuivre, collecteur et distributeur de fluide de l'échangeur sur un empilage de plaques séparées par des ailettes formant entretoises entre lesdites plaques et portant au moins une matrice brasée.

L'invention porte aussi sur un échangeur thermique en cuivre selon la revendication 14 comprenant au moins un récipient collecteur et distributeur de fluide soudé sur une matrice brasée portée par un empilage de plusieurs plaques séparées par des ailettes formant entretoises entre lesdites plaques, caractérisé en ce que ledit récipient est soudé sur au moins une couche d'un alliage contenant du cuivre et plus de 1 % en poids d'étain, ladite au moins une couche de cuivre et d'étain étant déposée sur ladite matrice brasée.

Selon un autre aspect, l'invention porte aussi sur une installation de séparation de fluide selon la revendication 16, en particulier de mélanges gazeux, comprenant au moins un échangeur selon l'invention, de préférence ladite installation est une unité de séparation cryogénique d'air.

Selon encore un autre aspect, l'invention concerne un procédé de séparation de fluid selon la revendication 17 ; en particulier de mélanges gazeux, dans lequel on utilise au moins un échangeur thermique selon l'invention, de préférence le fluide est de l'air.

Le principe de l'invention est applicable au soudage d'une pièce, par exemple une enceinte de collecte et distribution de fluide pour échangeur thermique, sur une matrice brasée, telle la matrice brasée d'un échangeur de chaleur formée par brasage d'un empilage de plaques séparées par des ailettes formant entretoises.

Pour éviter les problèmes de fissuration de la soudure susmentionnés, la pièce n'est pas soudée directement sur la matrice comportant la zone brasée formée d'un alliage de cuivre contenant en général moins de 10% phosphore et éventuellement d'autres composés, comme couramment opéré dans l'art antérieur.

En effet, en procédant comme connu de l'art antérieur, il a été constaté qu'au moment du soudage du collecteur sur la matrice brasée d'un échangeur, une faible épaisseur de l'échangeur brasé (matrice) est fondue par la soudure en fusion et de la brasure se trouve alors mélangée au dépôt de métal (joint de soudure) mais pas de manière homogène dans l'ensemble du dépôt.

Localement, dans le métal fondu au voisinage de la brasure, il se produit alors un enrichissement en éléments contenus dans la brasure. Parmi ces éléments, les inventeurs de la présente invention ont mis en évidence que le phosphore est celui qui est à l'origine des problèmes de fissuration se posant dans l'art antérieur si la concentration locale en phosphore dépasse la limite de solubilité dans "l'alliage local" résultant du mélange non homogène du métal déposé, du cuivre de l'échangeur et de la brasure.

Selon l'invention, pour éviter ce problème de fissuration dû au phosphore, on réalise d'abord un dépôt d'une ou plusieurs couches superposées d'un alliage de cuivre et d'étain (plus de 1 % en poids) sur la face de la matrice comportant le brasage de manière à constituer une assise sur laquelle on soude ensuite la pièce ; ces couches superposées de cuivre recouvrant la surface brasée sont appelées couches de "beurrage".

De cette façon, le dépôt de couches de "beurrage", opéré sur la surface sur laquelle aboutissent les interstices brasés de la matrice constitue une barrière isolante permettant d'éviter toute contamination éventuelle du joint de soudure par des résurgences d'éléments nuisibles provenant de la brasure, lors du soudage subséquent de la pièce sur les couches de beurrage.

En effet, les couches de cuivre ainsi formées peuvent admettre une quantité importante de polluants, en dilution, sans pour autant s'en trouver fortement détériorées.

Selon l'invention, la pièce est donc soudée selon le joint de soudure, sur la ou les couches de beurrage préalablement déposées sur la matrice brasée, et non pas directement sur la zone brasée, comme classiquement réalisé dans l'art antérieur.

Par ailleurs, la difficulté de souder le cuivre avec un produit d'apport en cuivre vient de ce que le cuivre fond et se solidifie à une température fixe et non dans un intervalle de température comme la plupart des alliages. De ce fait, le bain de soudage est très difficile à manier pour un soudeur et les cordons obtenus sont en général mal "mouillé", c'est-à-dire présentent un mauvais raccordement des cotés du cordon sur le métal de base, et présentent, en outre, souvent des défauts du type collage, c'est-à-dire que le métal d'apport est "posé" sur le métal de base sans fusion de ce dernier.

On peut tenter de s'affranchir de ces problèmes en effectuant un préchauffage de l'échangeur mais cette opération est très difficile à conduire car, du fait de la très bonne conductibilité thermique du cuivre, la chaleur apportée dans la zone de soudage diffuse très rapidement dans l'ensemble de l'échangeur, ce qui oblige à porter l'ensemble de l'échangeur à la température de préchauffage, par exemple à 300°C. On comprend dès lors que procéder de la sorte est long, coûteux et peut être à l'origine de défaut dans le beurrage car cela provoque l'oxydation de la surface sur laquelle on veut déposer les cordons de soudage.

Pour éviter tous ces inconvénients, des essais de mise en oeuvre de l'invention ont montré que l'on pouvait se dispenser de préchauffer la zone à souder, si l'on faisait précéder de quelques centimètres la torche MIG d'un arc électrique, par exemple TIG ou plasma déconfiné, ou de plusieurs disposés transversalement ou longitudinalement par rapport à la direction de soudage, ce qui assure un préchauffage très local mais efficace car la chaleur ainsi apportée par l'arc ou les arcs de préchauffage n'a pas le temps de diffuser significativement dans la masse de l'échangeur, du fait du peu de temps qui s'écoule entre le passage de préchauffage du ou des arcs TIG ou plasma et le passage de la torche MIG qui dépose le métal d'apport.

Une autre solution donnant satisfaction consiste à utiliser une torche hybride plasma-MIG qui se caractérise par un arc plasma qui entoure le fil d'apport et l'arc MIG.

Lorsqu'on souhaite minimiser les pollutions, plusieurs passes de soudage sont avantageuses car elles permettent d'obtenir plusieurs couches de "beurrage" superposées.

Bien entendu, les couches de beurrage ont une largeur suffisante et seront réalisées avec un alliage de cuivre et de plus de 1% d'étain, de préférence de l'ordre de 3 à 6% d'étain, pour lequel la limite de solubilité du phosphore est encore suffisamment importante à la température de solidification, par exemple une solubilité de 0,5 à 1%, pour que le phosphore provenant de la brasure et introduit dans la couche de beurrage puisse se diluer de manière suffisante pour éviter la formation de fissure et qu'une soudure additionnelle puisse être réalisée sans risque pour l'intégrité de la structure.

Ce procédé est particulièrement bien adapté à la fabrication d'échangeurs thermiques brasés utilisables pour séparer les gaz, en particulier par voie cryogénique au sein de colonnes de distillation cryogénique.

La structure détaillée d'un échangeur thermique ne sera pas décrite ci-après car elle est bien connue dans l'industrie et est par ailleurs visible notamment sur le site internet www.alpema.org ou décrite dans "The Standards of the Brazed Aluminium Plate-Fin Heat Exchanger Manufacturers Association", ALPEMA, Second Edition, 2000.

La structure détaillée de la zone brasée d'un échangeur en cuivre de ce type comprend un empilement de plaques ou feuilles métalliques séparées les unes des autres par des ailettes formant entretoises entre lesdites plaques. Lesdites ailettes sont brasées au niveau des extrémités des plaques de sorte d'y former une matrice brasée sur laquelle doit être soudée une ou des structures ou enceintes servant à collecter et à distribuer les fluides dans l'échangeur.

Selon l'invention, les couches de "beurrage" sont réalisées sur la surface externe de cette zone brasée de la matrice de l'échangeur, comme expliqué ci-dessus, avant le soudage de ladite structure ou enceinte de collecte et distribution de fluide sur cette ou ces couches de "beurrage" pouvant contenir des éléments d'alliage ou des impuretés inévitables.

Comme expliqué ci-dessus, pour réaliser la ou les passes de "beurrage", on opère d'abord un préchauffage localisé de la zone à revêtir, puis un dépôt d'alliage Cu/Sn fondu sur cette zone préchauffée, ledit alliage Cu/Sn étant amené sous la forme d'un fil fusible dont la fusion est obtenue par mise en oeuvre d'un arc électrique, en particulier au moyen d'une torche MIG. Le procédé MIG est préféré car ce procédé de soudage engendre des mouvements du bain liquide de métal en fusion plus important que le procédé TIG, ce qui conduit à éviter une concentration localisée de certains éléments néfastes, tels le phosphore, en particulier dans les zones du cordon de "beurrage" au croisement de la brasure.

Lors d'essais de mise en oeuvre de l'invention, il a été constaté qu'un alliage de type Cu-Sn6P, c'est à dire contenant environ 6 % d'étain, moins de 1% de phosphore et du cuivre pour le reste (jusqu'à 100%, en poids), hormis éventuellement des impuretés inévitables, peut admettre une quantité relativement importante de phosphore en dilution.

De plus, cet alliage Cu-Sn6P a une température de fusion inférieure au cuivre pur et donc plus proche de l'alliage de brasage (température solidus 900°C et liquidus 1050°C à comparer à 1083°C pour le cuivre pur).

Cet alliage conduit de plus une amélioration du « mouillage » ainsi qu'à une pénétration efficace de l'alliage fondu dans les lacunes des joints brasés.

La conductivité thermique de cet alliage Cu-Sn6P est de 57 W/m.K à température ambiante contre 380 W/m.K pour le cuivre pur. Cet alliage est donc plus facile à souder que le cuivre pur et peut donc être déposé par un procédé de soudage MIG mais aussi un procédé de soudage TIG avec un préchauffage modéré.

Par ailleurs, cet alliage permet de réaliser le beurrage mais ses caractéristiques permettent aussi de l'utiliser pour réaliser la soudure de fermeture de la boite. Cet alliage a aussi de très bonnes caractéristiques mécaniques à température cryogénique.

Cet alliage est normalisé dans l'AWS sous le nom Er Cu Sn-A et suivant le BS2901 part 3 grade C11.

Toutefois, pour effectuer le soudage de la pièce (récipient collecteur) sur la zone brasée revêtue de cuivre, on peut aussi utiliser une torche de soudage à l'arc, telle une torche MIG (Metal Inert Gas), TIG (Tungsten Inert Gas), plasma ou des combinaisons de telles torches, par exemple une torche plasma-MIG ou des torches MIG-TIG, et amener en complément un produit d'apport de type cuivre/nickel ou cuivre/aluminium ou, lorsque l'on souhaite assurer une liaison entre la zone recouverte de cuivre et une pièce en acier inoxydable, tel un collecteur de fluide, on peut être amené à utiliser d'autres produits d'apport du type nickel ou alliages de nickel. En effet, dans le cas de la fabrication d'un échangeur thermique, on peut choisir soit de souder directement le collecteur de fluide en acier inoxydable sur les couches de cuivre, soit de souder (via un joint de soudage) le collecteur de fluide en acier inoxydable sur une pièce intermédiaire en cuivre qui est elle-même soudée sur les couches de cuivre.

Le procédé de soudage de l'invention est particulièrement bien adapté à la fabrication d'échangeurs thermiques brasés utilisables pour séparer les gaz de l'air, en particulier par voie cryogénique au sein de colonnes de distillation cryogénique, car ces échangeurs seront plus résistants aux problèmes de fissuration que les échangeurs classiques.

## Revendications

1. Procédé de soudage à l'arc d'au moins une pièce métallique sur une matrice comprenant au moins une zone brasée dont le brasage contient du cuivre et du phosphore, **caractérisé en ce que** :
(a) on réalise, sur au moins une partie de la zone brasée, un dépôt d'au moins une couche d'un alliage contenant du cuivre et plus de 1 % en poids d'étain, et
(b) on opère un soudage de la pièce métallique sur ladite au moins une couche d'alliage de cuivre et d'étain déposée à l'étape (a).

2. Procédé selon la revendication 1, **caractérisé en ce que** l'alliage de cuivre et d'étain contient au moins 1.05% d'étain, de préférence au moins 1.2 % d'étain et/ou l'alliage de cuivre et d'étain contient moins de 10% d'étain.

3. Procédé selon l'une des revendications 1 ou 2, **caractérisé en ce que** l'alliage de cuivre et d'étain contient au moins 80% en poids de cuivre, de préférence au moins 90% de cuivre.

4. Procédé selon l'une des revendications 1 à 3, **caractérisé en ce que** l'alliage de cuivre et d'étain contient moins de 1 % en poids de phosphore.

5. Procédé selon l'une des revendications 1 à 4, **caractérisé en ce que** l'alliage de cuivre et d'étain contient de 2 % à 8 % en poids d'étain, de préférence de l'ordre de 3 à 6 % d'étain.

6. Procédé selon l'une des revendications 1 à 5, **caractérisé en ce qu'**à l'étape (a), on réalise un dépôt de plusieurs couches à base d'alliage de cuivre et d'étain se superposant au moins partiellement les unes aux autres.

7. Procédé selon l'une des revendications 1 à 6, **caractérisé en ce que** le dépôt d'au moins une couche d'alliage de cuivre et d'étain de l'étape (a) est réalisé par (i) préchauffage local de la zone à revêtir d'alliage et (ii) apport et dépôt, sur la zone préchauffée à l'étape (i), de l'alliage de cuivre et d'étain fondu par un arc électrique.

8. Procédé selon la revendication 7, **caractérisé en ce que** le préchauffage de l'étape (i) est opéré par mise en oeuvre d'un ou plusieurs arcs électriques, de préférence au moins un arc généré par une torche de soudage TiG ou plasma.

9. Procédé selon la revendication 7, **caractérisé en ce qu'**à l'étape (ii), l'apport d'alliage se fait sous la forme d'un fil en alliage de cuivre et d'étain.

10. Procédé selon l'une des revendications 7 ou 9, **caractérisé en ce qu'**à l'étape (ii), l'arc électrique permettant de fondre le fil fusible est généré par au moins une torche de soudage MIG ou TIG.

11. Procédé selon l'une des revendications 1 à 10, **caractérisé en ce que** ladite au moins une couche d'alliage de cuivre et d'étain déposée à l'étape (a) présente une limite de solubilité du phosphore comprise entre environ 0.1 et 3.5 % à la température de solidification.

12. Procédé selon l'une des revendications 1 à 11, **caractérisé en ce que** la matrice brasée est portée par un empilage de plusieurs plaques séparées par des ailettes formant entretoises entre lesdites plaques, lesdites ailettes et lesdites plaques étant basées les unes avec les autres de sorte de former ladite matrice brasée et/ou **en ce que** la pièce est une partie constitutive d'un récipient collecteur et/ou distributeur de fluide formant une partie d'un échangeur thermique, de préférence ladite pièce est en cuivre ou en acier inoxydable.

13. Procédé de fabrication d'un échangeur thermique brasé en cuivre dans lequel on met en oeuvre le procédé de soudage selon l'une des revendications 1 à 12 pour souder au moins un récipient, de préférence en cuivre, collecteur et distributeur de fluide de l'échangeur sur un empilage de plaques séparées par des ailettes formant entretoises entre lesdites plaques et portant au moins une matrice brasée.

14. Echangeur thermique en cuivre comprenant au moins un récipient collecteur et distributeur de fluide soudé sur une matrice brasée portée par un empilage de plusieurs plaques séparées par des ailettes formant entretoises entre lesdites plaques, **caractérisé en ce que** ledit récipient est soudé sur au moins une couche d'un alliage contenant du cuivre et plus de 1% en poids d'étain, ladite au moins une couche de cuivre et d'étain étant déposée sur ladite matrice brasée.

15. Echangeur selon la revendication 14, **caractérisé en ce que** le récipient collecteur et distributeur de fluide soudé est en cuivre ou en acier inoxydable.

16. Installation de séparation de fluide, en particulier de mélanges gazeux, comprenant au moins un échangeur selon l'une des revendications 14 ou 15, de préférence ladite installation est une unité de séparation cryogénique d'air.

17. Procédé de séparation de fluide, en particulier de mélanges gazeux dans lequel on utilise au moins un échangeur thermique selon l'une des revendications 14 ou 15, de préférence le fluide est de l'air.

## Patentansprüche

1. Verfahren zum Lichtbogenschweißen mindestens eines metallischen Stücks auf eine Matrix, umfassend mindestens eine gelötete Zone, deren Lötverbindung Kupfer und Phosphor enthält, **dadurch gekennzeichnet, dass**:
(a) auf mindestens einen Teil der gelöteten Zone mindestens eine Schicht einer Legierung aufgetragen wird, die Kupfer und mehr als 1 Gew.-% Zinn enthält, und
(b) ein Schweißen des metallischen Stücks auf die mindestens eine Schicht der Legierung aus Kupfer und Zinn, die in Schritt (a) aufgetragen wurde, vorgenommen wird.

2. Verfahren nach Anspruch 1, **dadurch gekennzeichnet, dass** die Legierung aus Kupfer und Zinn mindestens 1,05 % Zinn, vorzugsweise mindestens 1,2 % Zinn, und/oder dass die Legierung aus Kupfer und Zinn weniger als 10 % Zinn enthält.

3. Verfahren nach einem der Ansprüche 1 oder 2, **dadurch gekennzeichnet, dass** die Legierung aus Kupfer und Zinn mindestens 80 Gew.-% Kupfer, vorzugsweise mindestens 90 Gew.-% Kupfer, enthält.

4. Verfahren nach einem der Ansprüche 1 bis 3, **dadurch gekennzeichnet, dass** die Legierung aus Kupfer und Zinn weniger als 1 Gew.-% Phosphor enthält.

5. Verfahren nach einem der Ansprüche 1 bis 4, **dadurch gekennzeichnet, dass** die Legierung aus Kupfer und Zinn 2 bis 8 Gew.-% Zinn, vorzugsweise ungefähr 3 bis 6 Gew.-% Zinn enthält.

6. Verfahren nach einem der Ansprüche 1 bis 5, **dadurch gekennzeichnet, dass** in Schritt (a) mehrere Schichten auf Basis einer Legierung aus Kupfer und Zinn aufgetragen werden, die mindestens teilweise übereinander geschichtet werden.

7. Verfahren nach einem der Ansprüche 1 bis 6, **dadurch gekennzeichnet, dass** das Auftragen von mindestens einer Schicht einer Legierung aus Kupfer und Zinn aus Schritt (a) durch lokale Vorerhitzung (i) der mit der Legierung zu beschichtenden Zone und Aufbringen und Auftragen (ii) der durch einen Lichtbogen geschmolzenen Legierung aus Kupfer und Zinn auf die in Schritt (i) vorerhitzte Zone erfolgt.

8. Verfahren nach Anspruch 7, **dadurch gekennzeichnet, dass** die Vorerhitzung aus Schritt (i) durch Einsatz eines oder mehrerer Lichtbögen, vorzugsweise mindestens eines Lichtbogens, der durch einen TIG- oder Plasmaschweißbrenner erzeugt wird, erfolgt.

9. Verfahren nach Anspruch 7, **dadurch gekennzeichnet, dass** in Schritt (ii) das Aufbringen der Legierung in Form eines Drahtes aus einer Legierung aus Kupfer und Zinn erfolgt.

10. Verfahren nach einem der Ansprüche 7 oder 9, **dadurch gekennzeichnet, dass** in Schritt (ii) der Lichtbogen, der das Schmelzen des Drahtes ermöglicht, durch mindestens einen MIG- oder TIG-Schweißbrenner erzeugt wird.

11. Verfahren nach einem der Ansprüche 1 bis 10, **dadurch gekennzeichnet, dass** die mindestens eine Schicht der Legierung aus Kupfer und Zinn, die in Schritt (a) aufgetragen wird, eine Löslichkeitsgrenze des Phosphors zwischen ungefähr 0,1 und 3,5 % bei der Verfestigungstemperatur aufweist.

12. Verfahren nach einem der Ansprüche 1 bis 11, **dadurch gekennzeichnet, dass** die gelötete Matrix durch ein Stapeln von mehreren Platten, die durch Flügel getrennt sind, die Querstreben zwischen den Platten bilden, getragen wird, wobei die Flügel und die Platten miteinander verlötet sind, um die gelötete Matrix zu bilden, und/oder dass das Stück ein Bestandteil eines Sammelbehälters und/oder Verteilerbehälters von Fluid ist, das einen Wärmeaustauschteil bildet, wobei das Stück vorzugsweise aus Kupfer oder rostfreiem Stahl ist.

13. Verfahren zur Herstellung eines gelöteten Wärmetauschers aus Kupfer, bei dem das Schweißverfahren nach einem der Ansprüche 1 bis 12 eingesetzt wird, um mindestens einen Sammel- und Verteilerbehälter von Fluid, vorzugsweise aus Kupfer, des Wärmetauschers auf einen Stapel von Platten zu schweißen, die durch Flügel getrennt sind, die Querstreben zwischen den Platten bilden und mindestens eine gelötete Matrix tragen.

14. Wärmetauscher aus Kupfer, umfassend mindestens einen Sammel- und Verteilerbehälter von Fluid, der auf eine gelötete Matrix geschweißt ist, die von einem Stapel von mehreren Platten getragen wird, die durch Flügel getrennt sind, die Querstreben zwischen den Platten bilden, **dadurch gekennzeichnet, dass** der Behälter auf mindestens eine Schicht einer Legierung geschweißt ist, die Kupfer und mehr als 1 Gew.-% Zinn enthält, wobei die mindestens eine Schicht aus Kupfer und Zinn auf die gelötete Matrix aufgetragen wird.

15. Wärmetauscher nach Anspruch 14, **dadurch gekennzeichnet, dass** der geschweißte Sammel- und Verteilerbehälter von Fluid aus Kupfer oder rostfreiem Stahl ist.

16. Fluidzerlegungsanlage, insbesondere für gasförmige Mischungen, umfassend mindestens einen Wärmetauscher nach einem der Ansprüche 14 oder 15, wobei die Anlage vorzugsweise eine kryogene Luftzerlegungsanlage ist.

17. Fluidzerlegungsverfahren, insbesondere für gasförmige Mischungen, bei dem mindestens ein Wärmetauscher nach einem der Ansprüche 14 oder 15 verwendet wird, wobei das Fluid vorzugsweise Luft ist.

## Claims

1. Process for the arc welding of at least one metal workpiece to a matrix comprising at least one brazed zone, the braze of which contains copper and phosphorus, **characterized in that**:
(a) at least one layer of an alloy containing copper and more than 1% tin by weight is deposited on at least part of the brazed zone; and
(b) the metal workpiece is welded to the said at least one layer of copper/tin alloy deposited in step (a).

2. Process according to Claim 1, **characterized in that** the copper/tin alloy contains at least 1.05% tin, preferably at least 1.2% tin and/or the copper/tin alloy contains less than 10% tin.

3. Process according to either of Claims 1 and 2, **characterized in that** the copper/tin alloy contains at least 80% copper, preferably at least 90% copper, by weight.

4. Process according to one of Claims 1 to 3, **characterized in that** the copper/tin alloy contains less than 1% phosphorus by weight.

5. Process according to one of Claims 1 to 4, **characterized in that** the copper/tin alloy contains from 2% to 8% tin, preferably around 3 to 6% tin, by weight.

6. Process according to one of Claims 1 to 5, **characterized in that**, in step (a), several layers based on a copper/tin alloy are deposited, these being at least partly superposed one with respect to another.

7. Process according to one of Claims 1 to 6, **characterized in that** the deposition of at least one layer of copper/tin alloy of step (a) is carried out by (i) locally preheating the alloy zone to be coated and (ii) supplying and depositing, in the zone preheated in step (i) the copper/tin alloy melted by an electric arc.

8. Process according to Claim 7, **characterized in that** the preheating of step (i) is carried out by using one or more electric arcs, preferably at least one arc generated by a TIG or plasma welding torch.

9. Process according to Claim 7, **characterized in that**, in step (ii), the alloy is supplied in the form of a wire of copper/tin alloy.

10. Process according to either of Claims 7 and 9, **characterized in that**, in step (ii), the electric arc for melting the meltable wire is generated by at least one MIG or TIG welding torch.

11. Process according to one of Claims 1 to 10, **characterized in that** the said at least one layer of copper/tin alloy deposited in step (a) has a phosphorus solubility limit of between about 0.1 and 3.5% at the solidification temperature.

12. Process according to one of Claims 1 to 11, **characterized in that** the brazed matrix is supported by a stack of several plates separated by fins forming spacers between the said plates, the said fins and the said plates being brazed to one another so as to form the said brazed matrix and/or **in that** the workpiece is a component of a fluid collecting and/or distributing container forming part of a heat exchanger, the said workpiece preferably being made of copper or stainless steel.

13. Process for manufacturing a brazed copper heat exchanger, in which the welding process according to one of Claims 1 to 12 is used to weld at least one fluid collecting and distributing container, preferably made of copper, of the exchanger to a stack of plates separated by fins forming spacers between the said plates and supporting at least one brazed matrix.

14. Copper heat exchanger comprising at least one fluid collecting and distributing container welded to a brazed matrix supported by a stack of several plates separated by fins forming spacers between the said plates, **characterized in that** the said container is welded to at least one layer of an alloy containing copper and more than 1% tin by weight, the said at least one copper/tin layer being deposited on the said brazed matrix.

15. Exchanger according to Claim 14, **characterized in that** the welded fluid collecting and distributing container is made of copper or stainless steel.

16. Plant for separating fluids, particularly gas mixtures, comprising at least one exchanger according to either of Claims 14 and 15, preferably the said plant being a cryogenic air separation unit.

17. Process for separating fluids, particularly gas mixtures, in which at least one heat exchanger according to either of Claims 14 and 15 is used, the fluid preferably being air.
